# EUROPÄISCHE PATENTSCHRIFT

(11) **EP 1 006 791 B1**
(45) Veröffentlichungstag und Bekanntmachung des Hinweises auf die Patenterteilung: **22.01.2003**
(21) Anmeldenummer: 97925921.5
(22) Anmeldetag: 13.05.1997
(51) Int. Cl.: A01L 3/02, A01L 3/00

(54) **LAUFSCHUTZ FUR PFERDEHUFE**
PROTECTION FOR HORSE HOOVES
PROTECTION POUR SABOTS DE CHEVAUX

(30) Priorität: 15.05.1996 DE 19619634
(43) Veröffentlichungstag der Anmeldung: 14.06.2000
(73) Patentinhaber: Stübbe, Peter, 23552 Lübeck (DE); IGROW, Sergej, D-22309 Hamburg (DE)
(72) Erfinder: Stübbe, Peter, 23552 Lübeck (DE); IGROW, Sergej, D-22309 Hamburg (DE)
(86) Internationale Anmeldenummer: EP9702436
(87) Internationale Veröffentlichungsnummer: WO97042813

(56) Entgegenhaltungen:
- EP-A- 0 308 722
- WO-A-95/32619
- DE-A- 2 159 500
- DE-A- 3 406 733
- DE-A- 3 424 726
- US-A- 1 759 926

## Beschreibung

Die Erfindung betrifft einen Laufschutz, der im Oberbegriff des Anspruch 1 genannten Art. Bei einer bekannten gattungsgemäßen Konstruktion dieser Art, wie in der
WO 95/23619
beschrieben, dient die in Figur 8 dargestellte hufeisenförmige Form als Abriebschutz. Sie wird vom benachbart, am Huf anfreifendem Strukturkleber gehalten, wodurch ein großer Teil der Hufoberfläche nicht zur Haftung und Kräfteübertragung genutzt wird und wodurch Spalten zwischen Huf und Eisen bzw. Sohle entstehen, in denen nachteilig Wasser steht.

Mit der vorliegenden Erfindung gem. Anspruch 1 wird mit Hilfe der Form eine abriebfeste Außenhaut oder Lauffläche geschaffen, die durch Distanzstücke bzw. Abstandhalter an keiner Stelle das Horn direkt berühren und die es ermöglichen, daß nahezu die gesamte durch den Laufschutz bedeckte Oberfläche des Hufes mit dem Strukturkleber benetzt wird, sowie die gesamte innere Oberfläche der Form. Dadurch ergibt sich die denkbar höchste Haftkraft des Laufschutzes am Huf, sowie eine vorteilhafte Versiegelung der Hufsohle bzw. des Tragerandes gegen Feuchtigkeit.

Vorteilhaft bei der erfindungsgemäßen Konstruktion ist es, daß die Form so stabil ausgeführt werden kann, daß das Pferd schon darauf stehen kann, bevor der Strukturkleber eingefüllt und ausgehärtet ist. Wenn die Form beispielsweise aus Stahl- oder Aluminiumblech besteht und auch die Abstandhalter entsprechend stabil sind, kann das Pferd schon während der 5 bis 10 Minuten dauernden Aushärtezeit des Klebers den Huf belasten, ohne den Strukturkleber zu deformieren, welcher geschützt in dem Hohlraum zwischen Huf und Form unbeeinträchtigt hart werden kann. Das ist notwendig, weil es kaum möglich ist, ein Pferd dazu zu bringen, seinen Huf so lange ruhig oder hochzuhalten, wie der Strukturkleber braucht, um standfest zu werden.

Vorteilhaft bei der erfindungsgemäßen Konstruktion ist auch, daß durch die Dicke der Abstandhalter die Schichtdicke des Strukturklebers genau bestimmt werden kann. Außerdem ist dadurch die Möglichkeit gegeben, orthopädische Hufkorrekturen, z. B. dadurch vorzunehmen, daß die Abstandhalter für den lotrechten Abstand nach hinten ansteigend erhöht werden, um eine keilförmige Sohle im Laufschutz zu erzielen. Orthopädische Korrekturen der Hufumfangsform werden durch Veränderungen der waagerechten Abstandhalter erreicht.

Die Arbeit, den erfindungsgemäßen Laufschutz anzufertigen, wird dadurch vereinfacht, daß die stabile Form vor der Befüllung mit dem Strukturkleber am Huf genau angepaßt werden kann und mit Hilfe von auf den Huf geklebten Anschlägen, die ein Verdrehen und Abfallen der Form verhindern und eine lösbare Befestigung am Huf ermöglichen, und die dafür sorgen, daß die Form beim endgültigen Anbringen wieder in die vorgesehene Position auf den Huf gebracht wird. Vor dem endgültigen Anbringen der Form wird sie mit dem Strukturkleber gefüllt, dann auf den hochgenommenen Huf geschoben, wo sie an den Anschlägen wieder befestigt wird. Das überschüssige Strukturmaterial quillt unter die Hufsohle bzw. unter die Hornwand, wo es vom Handwerker angespachtelt wird. Die Anschläge liegen danach sozusagen unter Putz, und auch die konstruktionsbedingten Zwischenräume in der Form werden mit dem Strukturkleber zugespachtelt. Die Zwischenräume in der Formwandung sind notwendig, um die Anpassung der Form an die Rundungen und Schrägen des Hufes vornehmen zu können. Vor dem Einfüllen des Strukturklebers werden die Zwischenräume im Bereich der Standfläche der Form von unten vorteilhaft mit einer Klebefolie zugeklebt oder sonst mit einer Pappe oder Vorrichtung geschlossen. Nach oben, auf der Hornkapsel, kann der Bereich, der nicht mit dem Strukturkleber benetzt werden soll, mit einer Klebefolie abgedeckt werden. Vorteilhaft ist hierfür eine doppelseitig klebende Folie, weil auf ihr nach dem Verspachteln des Strukturklebers auf der Hufwand eine Sichtfolie befestigt werden kann, mit der der Strukturkleber von außen geglättet wird. Sichtfolien können entweder aus Materialien sein, die sich fest mit dem Strukturkleber verbinden und so zu einer verlorenen Schalung werden, oder aus trennbarem Material und so für den Handwerker wiederverwendbar sein. Solche Sichtfolien haben vorzugsweise die Form einer Abwicklung der Hornwand und tragen außen, zur Befestigung, auf der Hornwand, wenn diese aus Stahl ist, mit Haftkleber versehene versetzbare Magneten. Die Folien zur Formung einer gefälligen Außenhaut des Laufschutzes können auch aus wärmeschrumpfenden Material bestehen, die sich beim Erhitzen organisch an die Hufwand anschmiegen.

Da die beim Auffußen der Hufe entstehenden Eigenschwingungen des Metalls 5mal höher sind als die des Horns, ist es von Vorteil, daß der erfindungsgemäße Laufschutz durch den Strukturklebermantel die hohen Metallschwingungen absorbiert.

Die Schichtdicke des Strukturklebers und die Wandstärke der Form können den physiologischen Erfordernissen entsprechend variiert werden. Bestimmte Oberflächenbereiche der Hornkapsel können z.B. aus Gründen des besseren Feuchtigkeitshaushaltes des Hons vom Strukturkleber freigehalten werden, dadurch, daß die Hornwand vor dem endgültigen Anbringen der Laufschutzform mit entsprechenden Klebepolstern abgedeckt wird.

Die Formen für den erfindungsgemäßen Laufschutz können vorteilhafterweise so ausgebildet sein, daß sie unterschiedlichste Einlegeteile, sei es zur Erhöhung der Abriebfestigkeit oder zur Verbesserung der statischen oder dynamischen Eigenschaften des Laufschutzes, aufnehmen können. Die einzulegenden Teile wie Stollen, Gewindebuchsen, Querstege zwischen den Formschenkeln, Sohlenplatten, Drähte und Stahltrossen zur Stabilisierung oder zur Begrenzung der Aufweitungs- bzw. Spreizbewegung des Laufschutzes werden nach dem Aushärten des Struckturklebers zu fest integrierten Bestandteilen des Laufschutzes.

In den Zeichnungen ist die Erfindung beispielsweise und schematisch dargestellt. Es zeigen:
- Figur 1: eine erfindungsgemäße Laufschutzform in perspektivischer Ansicht ohne Huf
- Figur 2: die Konstruktion der Figur 1, am Huf befestigt, in Seitenansicht und einen Schnitt nach der Linie 6-6 der selben Figur
- Figur 3: eine erfindungsgemäße Laufschutzform aus Blech in perspektivischer Ansicht
- Figur 4: eine erfindungsgemäße Laufschutzform aus Kettengliedern in perspektivischer Ansicht

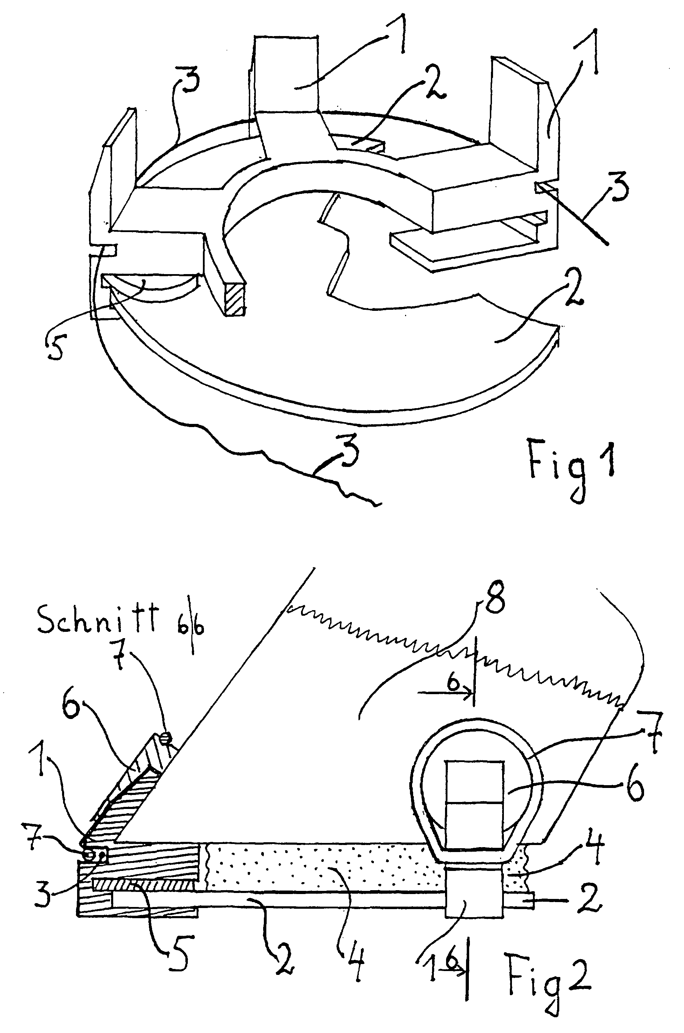

Die Figuren 1,2,3 und 4 zeigen Laufschutzformen von der in Anspruch 1 beschriebenen Art. Der Laufschutz wird aber erst komplett durch Hinzugabe des Strukturklebers, welcher hier nirgends gezeigt ist, und der die Hohlräume in den Formen und zwischen den Formen und den Hufen ausfüllt, und der spachtelbar ist. Figur 1 zeigt eine Formkonstruktion, bei der die Abstandhalter 1 vorzugsweise aus Kunststoff, z. B. Polycarbonat, sind. Die Abstandhalter 1 sind durch einen Steg miteinander verbunden und werden durch eine Grundplatte 2 in die gewünschte Hufform gebracht. Die Grundplatte 2 kann, z. B. aus einer Hartfaserplatte, ausgeschnitten werden, auf der zuvor der Pferdehuf abgestellt war, damit eine genaue Zeichnung vom Umfang des Hufes darauf gemacht werden konnte. Mit Hilfe des Drahtes 3 werden die Abstandhalter 1 fest gegen die Formplatte 2 gezurrt. Oberhalb der Formplattenaufnahme im Abstandhalter 1 befinden sich Aufnahmen für die Stahlplatten 5, aus denen sich die abriebfeste Sohle des Laufschutzes zusammensetzt.

Figur 2 zeigt die auch in Figur 1 dargestellte Form; die abnehmbar am Huf angebracht ist. Sie ist jedoch nur solange abnehmbar, wie der Strukturkleber nicht eingebracht und ausgehärtet ist. Die Abstandhalter 1 sind in ihrem auf den Huf ragenden Teil an die Schräge des Hufes angelegt worden. Das läßt sich durch Anhämmern bewerkstelligen, weil Polycarbonat kalt schmiedbar ist. Über wenigstens 2 angehämmerten Abstandhaltern 1 sind Anschläge 6 auf den Huf geklebt, so daß eine seitliche Verdrehung zwischen Huf und Form verhindert wird. Um ein Abfallen der Form nach unten zu verhindern, wird eine lösbare Verbindung zwischen Abstandhalter 1 und Anschlag 6 beispielsweise durch O-Ringe 7 oder durch Draht 7 oder Schlauchschellen 7 hergestellt. Die in den Figuren 1 und 2 dargestellte Formplatte 2 wird nach dem Aushärten des Strukturklebers durch Herausbrechen der Aufnahmen im Abstandhalter 1 für die Stahlplatten 5 und die Formplatte 2 herausgenommen. In Figur 2 ist eine Einlage 4 im Strahlbereich entweder herausnehmbar, als Platzhalter für den offen gewünschten Hohlraum unter dem Huf, oder als dauerhafte Stützplatte für das Sohlenhorn vorteilhaft vorgesehen.

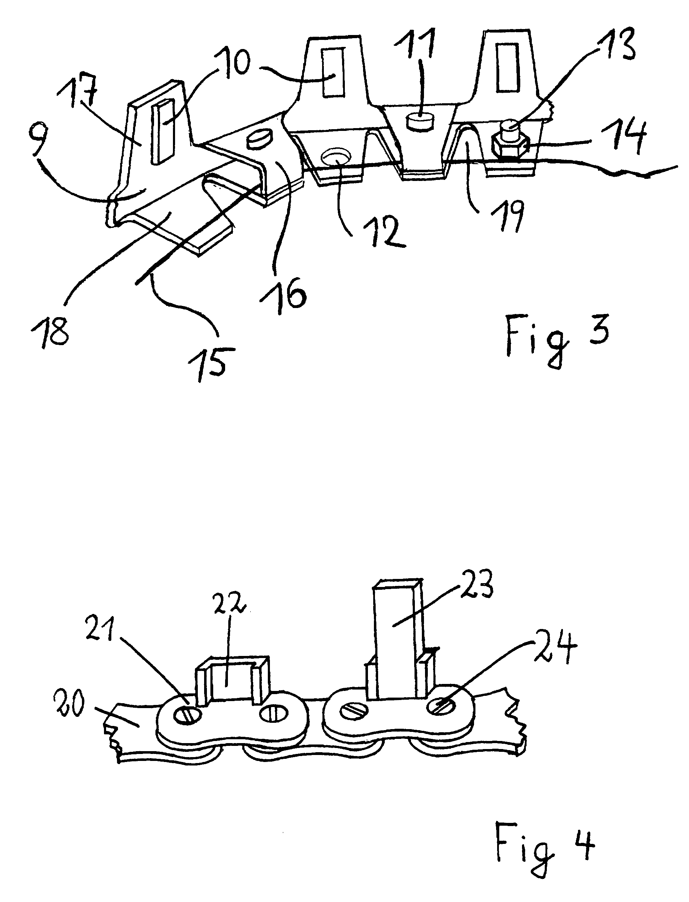

Die in Figur 3 dargestellte Ausführung einer Laufschutzform aus Blech wird für den gesamten Laufschutz, auch auf der Hornwand, zu einer festen Außenhaut. Diese sorgt für eine Armierung der Hufumfangsform, ohne die beim Auffußen stattfindenden Spreizbewegungen des Hufmechanismus zu behindern. Diese Armierung des Hufumfangs verhindert die Bildung von Hornspalten und kann als Therapie gegen sie eingesetzt werden. Das Blechmaterial und die konstruktive Ausführung des Formprofils machen eine Formsohle überflüssig. Das Formprofil wird direkt vom Handwerker um den unteren Hufrand gebogen. Zur Stabilisierung der Form wird ein provisorischer Steg, z.B. aus Draht, zischen den Profilschenkelenden angebracht. Das Profil ist so ausgebildet, das Standflächensegmente 16 als Auflagefläche für den Tragerand dienen. Auf den Standflächensegmenten 16 befinden sich Abstandshalter 11, die die Hufsohle einige Millimeter über dem Blech schweben lassen. Als Abstandshalter können auch die wahlweise in den Laufflächensegmenten eingeschraubten Schrauben 13 dienen. Für die Aufnahme solcher Schrauben, die auch die Abriebfestigkeit erhöhen, sind Bohrungen 12 in den Laufflächensegmenten 18 vorgesehen. Die Teile des Blechprofils, die nach Art von Aufzügen 17 auf die Hornwand ragen, werden an die Schräge der Hufwand angehämmert. Auf ihrer Innenseite tragen sie Abstandhalter 10. Zur Begrenzung der Spreizbewegung des Laufschutzes kann ein Draht 15, ein Seil 15 oder eine Stahltrosse 15 oder ähnliches eingelegt werden. Auch diese Laufschutzform wird mit Hilfe von Anschlägen 6, die auf den Huf geklebt werden, über wenigstens 2 Aufzügen 17 angebracht. Das Verbindungselement (O-Ring 7) oder dergleichen wird beim Blechprofil in die konstruktionsbedingten V-förmigen Einschnitte 19 zwischen den Laufflächensegmenten 18 aufgenommen.

Figur 4 zeigt eine Laufschutzform, die aus einer Kette 20 besteht, deren Scharniere 24 festgestellt werden können. Vorzugsweise sind die oberen Kettenglieder mit den Aufzügen 22 aus Kunststoff und nur die unteren Kettenglieder zum besseren Abriebschutz aus Stahl. Hierbei ist es vorteilhaft, daß sich kein Metall auf der Hornwand befindet, wodurch das Abnehmen des Laufschutzes am Ende der Beschlagsperiode einfach durch Abraspeln der Schicht mit den eingebetteten Aufzügen 22 und Klebelaschen 23 zu bewerkstelligen ist. Die Ausbildung der Laufschutzform als Kette ermöglicht eine besonders leichte Anformung an die Hufe. Die elastischen, in die Aufzüge 22 einklebbaren Klebelaschen 23 dienen zur einfachen Vorfixierung der Form auf dem Huf, wo sie mit Sekundenkleber angeklebt werden.

## Patentansprüche

1. Laufschutz für Pferde bestehend aus einem auf dem Huf (8) formsteif aushärtenden Mehrkomponenten-Strukturkleber und einer Form (1, 18, 20), die aus einem Material besteht, welches sich in die Form des Hufes bringen läßt und diese beibehält, sich mit Abstandshaltern (10, 11) auf dem Huf abstützt und nach Art einer teilweise oder ganz verlorenen Schalung den Huf oder Teile davon und den Strukturkleber, welcher anspachtelbar ist, in sich aufnimmt und sich durch den Strukturkleber fest und dauerhaft verbindet, **dadurch gekennzeichnet, daß** der Sturkturkleber die Hohlräume der Form (1, 18, 20) und zwischen der Form und dem Huf (8) ausfüllt.

2. Laufschutz nach Anspruch 1, **dadurch gekennzeichnet, daß** die Abstandhalter (1) mit Hilfe einer Sohlenplatte (2) in die genaue Hufform gebracht werden.

3. Laufschutz nach Anspruch 1 und 2, **dadurch gekennzeichend**, daß ein Draht (3) die Abstandhalter (1) fest gegen den Rand der Sohlenplatte (2) drückt.

4. Laufschutz nach Anspruch 1, **dadurch gekennzeichnet, daß** er mit Hilfe von Anschlägen (6) und lösbaren Verbindungselementen (7) gegen Verdrehen und Abfallen gesichert, lösbar am Huf (8) angebracht wird.

5. Laufschutz nach Anspruch 1, **dadurch gekennzeichnet, daß** die Abstandhalter (1) Aufnahmen für Stahlplatten (5) aufweisen, die abriebfeste Laufsohle des Laufschutzes bilden.

6. Laufschutz nach Anspruch 1, **dadurch gekennzeichnet, daß** herausnehmbare oder dauerhaft vergossene Sohlenplatten (4) vorgesehen sind.

7. Laufschutz nach Anspruch 1, **dadurch gekennzeichnet, daß** er aus einem mit der Hand anformbaren Blechprofil (9) hergestellt wird, welches mit einem provisorisch eingelegten Drahtsteg zwischen den Schenkelenden stabilisierbar ist.

8. Laufschutz nach Anspruch 7, **dadurch gekennzeichnet, daß** eine Stahltrosse (15) o. ä. zur Begrenzung der Spreizbewegung des Laufschutzes in das Blechprofil eingelegt wird.

9. Laufschutz nach Anspruch 7, **dadurch gekennzeichnet, daß** auf den Standflächen (16) und den Aufzügen (17) Abstandhalter (10, 11) angebracht sind.

10. Laufschutz nach Anspruch 7, **dadurch gekennzeichnet, daß** in den Laufflächensegmenten (18) Bohrungen (12) vorgesehen sind, die Einlegeteile (13, 14) aufnehmen können.

11. Laufschutz nach Anspruch 10, **dadurch gekennzeichnet, daß** Einlegeteile ((14) mit Gewinde vorgesehen sind, in denen herausschraubbare Stollen ausgenommen werden.

12. Laufschutz nach Anspruch 1, **dadurch gekennzeichnet, daß** er aus einer Kette (29) besteht, deren Scharniere (24) festgestellt werden können.

13. Laufschutz nach Anspruch 12, **dadurch gekennzeichnet, daß** die Glieder einer Kette auch aus unterschiedlichen Materialien bestehen können.

14. Laufschutz nach Anspruch 12, **dadurch gekennzeichnet, daß** die oben liegenden Kettenglieder lotrechte Aufzüge (22) aufweisen.

15. Laufschutz nach Anspruch 13, **dadurch gekennzeichnet, daß** in die Aufzüge (22) elastische Klebelaschen eingebracht werden können.

16. Laufschutz nach Anspruch 12, **dadurch gekennzeichnet, daß** die Schrauben, die als feststellbare Kettengliederscharniere dienen (24), so ausgebildet sind, daß sie auch als Stollen und als Abriebschutz fungieren.

## Claims

1. A protection for horses consisting of a mixed structural adhesive that sets onto the hoof. This protection for horses is **characterised by** a mould made of one or several materials, which can be given the shape of the hoof and which also retains this shape, and is supported by spacers on the hoof and takes up the hoof or parts thereof, as well as the structural spatula-applied adhesive, in the manner of a partially or totally consumable and sometimes sacrificial mould, being firmly and durably joined to the hoof by that structural adhesive.

2. Protection for horses hooves in claim 1, is **characterised by** the spacers by means of a Soleplate (2) which are brought in to the exact form of the hoof.

3. Protection for horses hooves in claims 1, and 2, and which are **characterised by** a wire (3) which presses the spacers (1) firmly against the rim of the Soleplate (2).

4. Protection for horses hooves in claim 1, and which is **characterised by** the securing to and against rotation and loss from the hoof, by means of fixed plates on the hoof (6) and detachable connecters (7), attached firmly to the hoof in a removable way.

5. Protection for horses hooves in claim 1, is **characterised by** the adaptors (1) of steelplates (5) which form an abrasion proof sole.

6. Protection for horses hooves in claim 1, is **characterised by** soleplates (4) which can either be permanently cast or temporarily attached.

7. Protection for horses hooves in claim 1, is **characterised by** a sheet metal profile (9) which can be bent by manually into the shape of the hoof and which can be stabilised by a temporary inserted bar made out of wire.

8. Protection for horses hooves in claim 7, is **characterised in that** a wirerope or similat structural element (15) is inserted into the the profile to limit the spreading movement of the protections for horses hooves.

9. Protection for horses hooves in claim 7, is **characterised by** the standing surface (16) and on the tabs (17) spacers (10, 11) which are attached.

10. Protection for horses hooves in claim 7, as **characterised by** the sole segments (18) which have counter-bores (12) which can take in Inserts (13, 14).

11. Protection for horses hooves in claim 10, and as **characterised by** threaded inserts (14) which are removeable.

12. Protection for horses hooves in claim 1, is **characterised by** a chain of plastic elements (29) in which the hinging mechanism (24) can be locked.

13. Protection for horses hooves in claim 12, is **characterised by** the links of the chain which can be made out of different materials.

14. Protection for horses hooves in claim 12, is **characterised by** the upper chain-links which have vertical tabs (22).

15. Protection for horses hooves in claim 13, is **characterised by** the tabs (22) which can be described as flexible glued positioning tabs

16. Protection for horses hooves in claim 12, is **characterised by** screws which act as fixable chain links (24) which also serve as studs and as a protection against abrasion.

## Revendications

1. Protection de sabot pour chevaux, composé d'une colle de structure poly-composante durcissant rigidement sur le sabot (8) et d'un moule (1,18,20), fait d'une matière qui se laisse déformer pour suivre la forme du sabot, qui la maintient, et qui repose sur le sabot à l'aide de pièces de distance (10,11). Dans la manière d'un moulage en coquilles partiellement ou entièrement perdu, le moule enrobe le sabot ou une partie du sabot et se remplit de la colle de structure, qui s'applique à l'aide d'une spatule, se lie à l'aide de la colle de structure solidement et durablement, **caractérisé en ce que** la colle de structure remplit les espaces vides du moule (1,18,20) entre le moule et le sabot (8).

2. Protection de sabot selon la revendication 1, **caractérisé en ce que** les pièces de distances (1) sont mises en forme d'après la forme exacte du sabot à l'aide d'une plaque constituant une semelle (2).

3. Protection de sabot selon les revendications 1 et 2, **caractérisé en ce qu'un** fil de fer (3) presse fermement les pièces de distance (1) contre le bord de la plaque constituant la semelle (2).

4. Protection de sabot selon la revendication 1, **caractérisé en ce qu'elle** est fixée d'une manière détachable sur le sabot (8) à l'aide d'arrêts (6) et d'éléments de fixation détachables (7) enfin qu'elle ne tombe pas et ne se torde pas.

5. Protection de sabot selon la revendication 1, **caractérisé en ce que** les pièces de distance (1) contiennent des espaces prévus pour des plaquettes métalliques (5) constituant une semelle contre l'abrasion de la protection de sabot.

6. Protection de sabot selon la revendication 1, **caractérisé en ce qu'il** est prévu une plaque constituant une semelle (4) détachable ou durablement coulée.

7. Protection de sabot selon la revendication 1, **caractérisé en ce qu'elle** est fabriquée par un profil métallique (9) mis en forme manuellement, qui est maintenu en forme au bout des branches par une entretoise en fil de fer fixée provisoirement.

8. Protection de sabot selon la revendication 7, **caractérisé en ce qu'un** câble (15) ou une fixation semblable est déposé dans le profil métallique pour réduire le mouvement d'écartement de la protection de sabot.

9. Protection de sabot selon la revendication 7, **caractérisé en ce que** des pièces de distance (10,11) sont attachées sur la semelle extérieure (16) et sur les bretelles (17).

10. Protection de sabot selon la revendication 7, **caractérisé en ce que,** dans les segments de la semelle extérieure (18) sont prévu des perçages (12) pouvant accueillir des pièces d'insertion (13,14).

11. Protection de sabot selon la revendication 10, **caractérisé en ce que** les pièces d'insertion (14) sont munies de filets pouvant accueillir des crampons à dévisser.

12. Protection de sabot selon la revendication 1, **caractérisé en ce qu'elle** est constituée d'une chaîne (29) avec des charnières (24) qui peuvent être fixées.

13. Protection de sabot selon la revendication 12, **caractérisé en ce que** les maillons d'une chaîne peuvent être constitués de matériaux différents.

14. Protection de sabot selon la revendication 12, **caractérisé en ce que** les maillons supérieurs de la chaîne sont munis de bretelles verticales (22).

15. Protection de sabot selon la revendication 13, **caractérisé en ce que** les bretelles (22) peuvent être munies de languettes à coller élastiques.

16. Protection de sabot selon revendication 12, **caractérisé en ce que** les visses servant de charnières qui peuvent être fixées (24), sont constituées de manière à prendre aussi la fonction de crampons et de protections d'usure.
